# EUROPÄISCHE PATENTSCHRIFT

(11) **EP 1 829 443 B1**
(45) Veröffentlichungstag und Bekanntmachung des Hinweises auf die Patenterteilung: **15.04.2009**
(21) Anmeldenummer: 07003958.1
(22) Anmeldetag: 27.02.2007
(51) Int. Cl.: A01D 46/247

(54) **Obstadaptivpflücker mit verstellbarem Pflückrechen und gekammertem Auffangbeutel**
Adaptive fruit picker with adjustable picking rake and sectioned collection bag
Cueilleur de fruits adaptatif doté d'un râteau de cueillette réglable et d'un sac de réception compartimenté

(30) Priorität: 01.03.2006 DE 102006009308
(43) Veröffentlichungstag der Anmeldung: 05.09.2007
(73) Patentinhaber: Zenkner, Ingrid, 97072 Würzburg (DE)
(72) Erfinder: Zenkner, Ingrid, 97072 Würzburg (DE)
(74) Vertreter: Götz, Georg Alois

(56) Entgegenhaltungen:
- WO-A-20/04043807
- DE-U1- 29 815 318
- GB-A- 901 812
- US-A- 3 855 765

## Beschreibung

Die Erfindung bezieht sich auf einen Obstadaptivpflücker, bestehend aus einer Stange an deren oberem Ende ein horizontaler Pflückrechen mit Zinken sowie in einem Abstand darunter ein Aufhaltering befestigt sind, der einen Auffangbeutel mit mehreren Kammern an seiner Oberseite offen hält.

Seitdem der Mensch überhaupt existiert, ist das Pflücken von Obst eine für ihn existentielle Aufgabe, da Früchte ein auf Dauer unverzichtbarer Bestandteil der menschlichen Ernährung sind.

Einige Früchte sind vom Boden aus zu erreichen, andere durch Erklettern des Baumes und weitere durch das Aufstellen einer Leiter neben oder unter dem Baum. Nachteilig ist, dass das Besteigen einer Leiter sowie das Erklettern eines Baumes mühsam und risikoreich ist.

Deshalb ist es Stand der Technik, dass als Hilfsmittel eine Stange eingesetzt wird, an deren Ende eine Pflückvorrichtung angeordnet ist. Die wohl am weitesten verbreitete Anordnung beschreibt das Gebrauchsmuster DE 298 153 18. Am Ende eines langen Stiels ist ein Tragring angeordnet, an dessen Unterseite ein Fangbeutel befestigt ist. Der Tragring ist an seiner Oberseite mit Zähnen, Haken, Greifnuten oder ähnlichen Ausformungen versehen, welche um den Stiel der zur pflückenden Frucht herum greifen und dadurch das Abziehen der Frucht ermöglichen. Sobald sich die Frucht von ihrem Stiel oder mitsamt dem Stiel vom Ast gelöst hat, fällt die Frucht in den Fangbeutel.

Diese Anordnung weist jedoch zahlreiche Nachteile auf. So muss unter anderem für das Abtrennen der Frucht der Tragring und damit der gesamt Obstpflücker weiter angehoben werden. Eine Bewegung in dieser Richtung belastet den pflückenden Menschen zusätzlich zu seinem Kraftaufwand für das Kompensieren der Schwerkraft von Pflückgerät und bereits gepflücktem Obst und zusätzlich zu seiner Mühe beim genauen Heranführen der Pflückvorrichtung an die Früchte.

Ein weiterer Nachteil ist, dass während des Abtrennvorgangs das zu pflückende Obst nicht sichtbar ist, weil es durch den Fangbeutel verdeckt wird. Ein weiterer Nachteil ist, dass die Abstände zwischen den Aussparungen oder Zacken auf dem Tragring fest und nicht veränderbar sind. Zwar ist der Durchmesser der Stiele bei den meisten Früchten sehr viel kleiner als der Durchmesser der Frucht, so dass recht nahe beieinanderstehende Zinken nur in Bezug auf den Durchmesser theoretisch sowohl das Pflücken von sehr kleinen Früchten wie Kirschen als auch sehr großen wie Birnen ermöglichen sollten.

Ein gravierender Nachteil dieses Konzeptes ist es jedoch, dass mit sehr nahe beieinander stehenden Zinken auch Blätter und kleine Äste erfasst und vom Baum abgerissen werden, was nicht nur zusätzliche Mühe verursacht und zu entsorgenden Abfall erzeugt, sondern auch zu einer Beschädigung des Baumes und damit langfristig zu einer Verminderung seiner Ertragskraft führt. Aus diesem Grunde ist es zu bevorzugen, dass die Abstände der Zinken zueinander möglichst groß gewählt werden sollte und zwar so groß, dass die zu pflückenden Früchte gerade noch sicher gegriffen werden können, aber möglichst wenig Äste und Blätter erfasst werden.

Ein weiterer Nachteil der verbreiteten Obstpflücker ist, dass sie zumeist nur über eine Stange mit fester Länge verfügen. Zwar ist der benutzende Mensch in der Lage, in den Grenzen seiner Körperhöhe zuzüglich der Länge des ausgestreckten Armes die Stange über die Erdoberfläche hinaus anzuheben. Eine weitere Verlängerung könnte theoretisch dadurch erreicht werden, dass die Stange entsprechend verlängert wird.

Eine einstückige Stange hat jedoch den gravierenden Nachteil, dass sie beim Pflücken von niedrig hängenden Früchten nicht mehr senkrecht gehalten werden kann, weil sie auf die Erdoberfläche stößt. Dadurch wird der Benutzer gezwungen, die Stange nicht mehr senkrecht sondern schräg zu halten, was das Manövrieren im Gewirr der Äste erheblich behindert.

Ein weitere Nachteil der am weitesten verbreiteten Pflückeinrichtung ist, dass die abgerissenen Früchte ungebremst auf diejenigen Früchte auftreffen, welche bereits im Fangbeutel liegen. Zu Beginn der Füllung eines Fangbeutels ist die Fallhöhe am größten. Die dabei auftretenden Stöße können zu einer partiellen Zerstörung von Fruchtfleisch führen, insbesondere in Bereichen unterhalb der Schale was zu vorzeitig ungenießbaren, jedoch von außen nicht ohne weiteres als solchen erkennbaren Früchten führt.

Auf diesem Hintergrund hat sich die Erfindung die Aufgabe gestellt, einen Früchtepflücker zu entwickeln, der auf die Größe der zu pflückenden Früchte einstellbar ist und möglichst wenig Schäden an Ästen und Blättern verursacht und die Früchte möglichst ohne oder mit nur mit sehr sanftem Aneinanderstoßen sammelt und am Boden möglichst ohne weitere Bewegung der Früchte gegeneinander in einen Sammelbehälter entleerbar ist und auf die unterschiedlich hohe Position der Früchte am Baum einstellbar ist.

Die von der Erfindung vorgeschlagene Lösung unterscheidet sich von den verbreiteten Früchtepflückern mit einem Pflückrechen mit Zinken und einem Auffangbeutel an einer Stange dadurch, dass die Abstände der Zinken zueinander verstellbar sind und der schlauchförmige Auffangbeutel in mehrere, hintereinander folgende Kammern aufteilbar ist, wobei die Anzahl und die Größe der Kammern einstellbar sind, indem je eine Kammerraffschnur etwa horizontal durch Schlaufen um den Auffangbeutel herum geführt und an der Stange lösbar befestigt ist, wobei die unterste Kammerraffschnur zugleich als Verschluss der Unterseite des Auffangbeutels dient und die Stange aus mehreren, ineinander schiebbaren und lösbar miteinander verbundenen, rohrförmigen Teleskopelementen besteht.

Diese Anordnung differenziert sich in ihrer mechanischen Struktur von manchen, bekannten Obstpflückern dadurch, dass der Pflückrechen getrennt vom Auffangbeutel am oberen Ende der Stange angeordnet ist und in einem Abstand dazu an der Stange als weiteres Element der Aufhaltering befestigt ist, welcher den Auffangbeutel trägt.

Ein weiterer Unterschied ist, dass der Auffangbeutel durch die Kammerraffschnüre in mehrere Kammern aufgeteilt werden kann. Diese Kammerraffschnüre dienen mehreren Funktionen. Die oberste Kammerraffschnur formt eine erste, große Kammer deren Abschluss nicht senkrecht unterhalb des Aufhalteringes angeordnet ist, sondern in der Nähe der Stange. Dadurch wird erreicht, dass der Auffangbeutel unter dem Aufhaltering einen durchhängenden Bereich bildet, der fallende Früchte auffängt, den Stoß abfedert und dann in eine seitlich abrollende Bewegung weiterleitet.
Wenn die durch Zusammenziehen der obersten Kammerraffschnur gebildete Einschnürung des Auffangbeutels nur wenig größer als die zu pflückenden Früchte ist, fällt die Frucht durch diese Öffnung hindurch in die nächste Kammer.

Da die Stange während des Pflückens zumeist gegenüber der Erdoberfläche schräg gehalten wird, ist auch die Eintrittsöffnung in die zweite Kammer des Auffangbeutels nicht senkrecht oberhalb der Austrittsöffnung dieser zweiten Kammer. Deshalb wird eine Frucht bei ihrem Fall in die zweite Kammer hinein ebenso wie in der ersten Kammer zuerst auf die seitliche Wand der zweiten Kammer auftreffen und dort abgebremst werden. Je nach Einstellung der Kammerraffschnüre sowie der Gesamtlänge des Auffangbeutels können die Früchte mehrere Kammern durchlaufen bis sie in der letzten Kammer angelangt sind.

Falls vorrangig eine senkrechte Arbeitsposition des Obstadaptivpflückers bevorzugt wird, schlägt die Erfindung zusätzliche Distanzelemente vor, die in radialer Ausrichtung auf der Stange befestigt sind. Wenn die Schlaufen und/oder die Kammerraffschnur daran befestigt werden, ist für eine von der Senkrechten abweichende Ausrichtung der Kammern des Auffangbeutels gesorgt.

Wenn die unterste und letzte Kammer teilweise mit Früchten befüllt ist kann sie verschlossen werden, indem die Kammerraffschnur am oberen Ende der Kammer angezogen wird. Dann werden keine weiteren Früchte mehr in diese Kammer hineinfallen, sondern bereits in der nächsthöheren Kammer zum Halten kommen. Ein Vorteil ist, dass dann eine Beschädigung der Früchte in der unteren Kammer durch auftreffende andere Früchte ausgeschlossen ist.

Ein weiterer zusätzlicher Nutzen eines erfindungsgemäßen Obstadaptivpflückers ist der große Abstand zwischen dem Pflückrechen und dem Aufhaltering. Dadurch sind die Früchte während der Annäherung des Pflückrechens stets sichtbar und nicht durch den Auffangbeutel verdeckt, sofern die Stange nicht in einer genau vertikalen Position gehalten werden muss.

Um auch in diesem Fall einen Sichtkontakt auf den Pflückrechen zu ermöglichen, schlägt die Erfindung die Verwendung von Netzen oder wenigstens teilweise durchsichtigen Materialien für den Auffangbeutel vor.

Ein weiterer, ergonomischer Gewinn während des Abreißens der Früchte ist, dass der Früchterechen von oben her zwischen Frucht und Ast geführt wird und bei der Abreißbewegung von der Schwerkraft unterstützt wird.

Eine vorteilhafte Zusatzfunktionalität des erfindungsgemäßen Auffangbeutels ist, dass die geernteten Früchte zur Entleerung nicht wieder durch den Aufhaltering hindurch befördert werden müssen, sondern durch Lösen der Kammerraffschnüre aus dem unteren Ende des schlauchförmigen Auffangbeutels heraus in einen anderen Sammelbehälter hinein entlassen werden können. Dabei ist es empfehlenswert, dass ein maximal befüllter Auffangbeutel langsam in den Sammelbehälter eingelegt wird und erst danach als zweiter Schritt die Kammerraffschnüre geöffnet werden. Im dritten Schritt wird der Auffangbeutel langsam angehoben und gleitet zwischen den Früchten und der Wand des Sammelbehälters nach oben. Der entscheidende Vorteil dieses Entleerungsprinzips ist, dass den Früchten ein weiterer, freier Fall mit dem daraus resultierenden Aufprall erspart bleibt.

Eine weitere, günstige Eigenschaft eines erfindungsgemäßen Obstadaptivpflückers ist die Verstellbarkeit des Abstandes zwischen den Zinken des Pflückrechens. Als eine Ausführungsvariante dafür schlägt die Erfindung vor, dass der Pflückrechen aus zwei gleichartigen, flächigen Elementen in der Form eines Kammes mit den Zinken aufgebaut wird. Für maximalen Abstand zwischen den Zinken sind diese beiden kammartigen Elemente deckungsgleich und vor einander angeordnet. Um den Abstand zwischen den Zinken zu verändern werden die beiden kammförmigen Elemente in horizontaler Richtung gegeneinander verschoben. Dadurch tritt der Zinken eines Elementes aus dem Schatten des ihn berührenden Zinkens am ändern Element hervor und wird im Zwischenraum zwischen zwei Zinken sichtbar. Dadurch bildet sich eine Reihe von Zinken, die abwechselnd in einem kleinen und einem großen Abstand zueinander stehen; nur in der Mittelstellung sind die Abstände aller Zinken zueinander gleich groß und entsprechen der Hälfte des maximalen Zinkenabstandes.

Eine andere interessante Ausführungsform ist, dass die Zinken des Pflückrechens als einzelne Teile ausgeführt werden, die in einer horizontal angeordneten Schiene mit C-förmigem Profil verschiebbar und fixierbar sind. Eine solche Anordnung ermöglicht die freie Einstellung der Abstände zwischen den Zinken. Möglich sind also auch sehr stark unterschiedliche Abstände. Da in der Mehrzahl der Fälle jedoch ein gleichmäßiger Abstand zwischen den einzelnen Zinken gewünscht wird, schlägt die Erfindung vor, dass einzelne, in der horizontalen Schiene verschiebbare Zinken über eine Scherenmechanik miteinander verbunden sind. Diese Scherenmechanik besteht aus Schwenkhebeln mit je einer Schwenkachse an den Enden sowie einer dritten Schenkachse in der Mitte. Je zwei Schwenkhebel sind in ihrer Mitte kreuzweise miteinander verbunden. An zwei Endpunkte eines dadurch gebildeten Kreuzes ist ein weiteres Kreuz gelenkig angebunden. Eine Reihe von mehreren solcher, aneinandergebundenen Kreuze bildet eine Scherenmechanik. Eine der beiden äußeren Reihen der Verschwenkachsen ist auf den zu verschiebenden Zinken des Pflückrechens angeordnet. Dabei kann die Scherenmechanik sowohl in der gleichen Ebene wie die Zinken als auch in einem anderen Winkel dazu angeordnet werden.

Der entscheidende Vorzug dieser Anordnung ist, dass im gesamten System eine eindeutige geometrische Verknüpfung dafür sorgt, dass die Abstände zwischen sämtlichen, mit der Scherenmechanik verbunden Zinken immer untereinander identisch sind. Wenn eine Verschiebung zwischen zwei benachbarten Zinken vorgenommen wird, so überträgt sich diese Bewegung über die Scherenmechanik auf alle anderen Zinken. Auch über die beiden äußeren Zinken ist eine Verstellung möglich.

Ein Merkmal dieser Anordnung ist, dass nur beim maximalen Abstand der Zinken die gesamte Länge der Führungsschiene ausgenutzt wird. Bei einer Reduzierung des Abstandes reduziert sich auch die mit Zinken bestückte Länge der Führungsschiene und es entsteht ein "zinkenfreier" Bereich, der funktionslos und hinderlich ist.

Deshalb schlägt die Erfindung eine weitere Variante vor, bei der die horizontale Schiene in zwei Teilschienen aufgeteilt wird, welche sich an zwei Seitenflächen überlappen und in diesem Bereich gegeneinander verschiebbar sind und in verschiedenen Positionen fixiert werden können. Jede Teilschiene ist mit verschiebbaren Zinken bestückt, welche über eine Scherenmechanik miteinander verbunden sind. An den jeweils äußeren Punkten beider Teilschienen ist der jeweils äußerste Zinken ortsfest angeordnet, jedoch mit an das Scherengitter angeschlossen. Wenn die Verbindung zwischen den beiden Teilschienen gelöst wird und die beiden Teilschienen übereinander geschoben werden, reduziert sich über die Scherenmechanik der Abstand zwischen den einzelnen Zinken.
Der entscheidende Vorteil dieser Anordnung ist, dass auch bei sehr kleinem Abstand der Zinken zueinander die Führungsschiene und damit die gesamte Breite des Führungsrechens mit Zinken bestückt ist und kein "zinkenloser" Bereich als zusätzliches Hindernis beim Manövrieren des Obstadaptivpflückers gegen Blätter und Äste stoßen kann.

In allen Varianten ist es denkbar, dass die Zinken auf einem Kreisbogensegment angeordnet werden, was als Erleichterung beim Handling des Obstpflückers einzustufen ist.

In einer weiteren Ausführungsform schlägt die Erfindung vor, dass die Zinken aus einem harten Kern bestehen, der mit einer weichen Polsterschicht ummantelt ist, um die Früchte noch schonender zu behandeln.

Eine andere sinnvolle Option ist es, dass die Kammerraffschnüre bis zum unteren Ende der Stange verlaufen und dort fixierbar sind; zum Beispiel durch zwei beabstandete Haken, um welche die Schnur gewickelt werden kann oder durch eine Klemmvorrichtung, die das Ende der Schnur fixiert.

Eine sehr interessante Ausführungsform ist die Ausbildung der Stange als Rohr, die mit ihrem oberen Ende in den Auffangbeutel übergeht. Dadurch wird es möglich, die Früchte aus dem Auffangbeutel zu entleeren, ohne den Obstadaptivpflücker aus dem Baum herausziehen zu müssen und auf den Boden abzusenken. Dazu ist es erforderlich, dass entweder die Kammerraffschnüre oder zusätzliche, ähnliche Schnüre am Auffangbeutel angebracht werden, von dort zu einem Führungselement (wie z.B. einem Haken oder einer Umlenkrolle) an der Stange geführt werden und weiter bis zum unteren Ende der Stange. Dort kann der Benutzer durch Ziehen an den Schnüren den Auffangbeutel über die Eintrittshöhe des Rohres hinaus anheben und dadurch innerhalb des Auffangbeutels eine geneigte Ebene erzeugen, auf der die Früchte aus den Auffangbeutel hinaus und in das Rohr hineinrollen und dann innerhalb des Rohres nach unten gleiten.

Um zu verhindern, dass die Früchte am unteren Ende des Rohres auf den Boden fallen, empfiehlt die Erfindung in der vorgenannten Konfiguration auch an das untere Ende des Rohres einen Auffangbeutel anzuschließen, der ähnlich dem oberen Auffangbeutel geformt ist. Auch dieser Beutel sollte möglichst schräg zur Erdoberfläche ausgerichtet sein, damit die Früchte beim Auftreffen zuerst durch das flexible Material des Auffangbeutels abgefedert und verzögert werden, bevor sie an das Ende des Auffangbeutels weiterrollen und dort auf andere bereits gepflückte Früchte auftreffen.

Es gehört zum Kennzeichen eines erfindungsgemäßen Obstadaptivpflückers, dass die Stange aus mehreren, ineinander schiebbaren und lösbar miteinander verbunden, rohrförmigen Teleskopelementen besteht. Theoretisch ist die Länge dieser Teleskopelemente nicht begrenzt. Sobald die Stange am Boden liegt, wird der Benutzer vom Gewicht der Stange entlastet und kann mit der einen Hand ein Teleskopelement fest halten und mit der anderen Hand die Verbindung zwischen zwei benachbarten Teleskopelementen entriegeln. Im nächsten Schritt zieht er dann ein Teleskopelement aus dem benachbarten heraus oder schiebt es hinein.

Es wäre jedoch zum Manövrieren im Baum vorteilhaft, wenn eine teleskopierbare Stange auch in Arbeitsposition verlängert oder verkürzt werden könnte. In dieser Situation ist es nicht mehr möglich, den Vorgang des Entriegelns der Verbindung zwischen zwei Teleskopelementen von dem Auseinanderziehen oder Zusammenschieben der Teleskopelemente zu trennen. Deshalb schlägt die Erfindung als zusätzliche Variante vor, dass am unteren Ende eines jeden Teleskopelementes ein Handgriff angeordnet wird. Dieser Handgriff kann alternativ an einer Verlängerungsstange angeordnet sein. Der Handgriff wird vorzugsweise radial zur Stange ausgerichtet. Dadurch wird es möglich, dass im zusammengeschobenen Zustand die Handgriffe aller Teleskopelemente nicht aufeinander stoßen, sondern nebeneinander über den Umfang verteilt sind.

Die Erfindung schlägt vor, dass die Handgriffe nicht nur zum Führen des Teleskopelementes in Längsrichtung verwendet werden, sondern durch eine zusätzliche Bewegung in radialer Richtung auch zum Blockieren zweier benachbarter Teleskopelemente. Die detailliere Ausführung des dafür erforderlichen Verschlusses wird hier nicht weiter ausgeführt, da es als bekannter Stand der Technik einem Fachmann wohl vertraut ist.

Als weitere Variante schlägt die Erfindung vor, dass die Schubstangen sehr lang sind. Der daraus resultierende Vorteil ist, dass auch sehr lange Teleskopelemente in einer senkrechten Position oder nahezu senkrechten Position des Obstpflückers auseinander geschoben werden können.

Um die Schubstangen im zusammen geschobenen Zustand aller Teleskopelemente nicht über das untere Ende der Stange hinaus ragen lassen zu müssen, schlägt die Erfindung vor, dass die Schubstangen nahe ihrer Befestigung am unteren Ende eines jeden Teleskopelementes verschwenkbar gestaltet sind, wobei die Verschwenkachse senkrecht zur Längsachse des Teleskopelementes orientiert ist und damit ein Verschwenkbereich von knapp 180 Grad ermöglicht wird. Die Schubstange wird samt Handgriff also an die Außenfläche eines jeden Teleskopelementes herangeklappt.

Als eine weitere Variante zur Verstellung der Abstände der Zinken schlägt die Erfindung vor, dass jeder Zinken des Pflückrechens als ein Einzelteil ausgeführt wird, welches etwa rechtwinklig zum Zinken durch einen langen Schwenkhebel erweitert wird, an dessen Ende eine Schwenkachse angeordnet ist. Sämtliche Verschwenkhebel werden auf einer einzigen, gemeinsamen Schwenkachse gelagert, welche in der Nähe der Stange angeordnet ist. Indem jeder einzelne Schwenkhebel gegenüber dem benachbarten um einen geringen Winkel verschwenkt wird, werden die Zinken in einen veränderten Abstand zueinander gebracht.

Zur Verstellung des Abstandes ist es sinnvoll, sämtliche Schwenkhebel durch je eine Öffnung in einer kreisbogensegmentförmigen Kulisse zu führen, welche mit einem bestimmten Radius ausgeführt ist. Die Öffnungen in dieser Kulisse sollten geringfügig größer als das Profil der Verschwenkhebel sein, damit die Kulisse näher an die gemeinsame Verschwenkachse herangeführt werden kann, um die Zinken weiter auseinander zu fahren oder von der Schwenkachse entfernt wird, um die Zinken näher aneinander heran zu bringen.

Ein Vorteil dieser Einrichtung ist, dass sie aus identischen Teilen aufgebaut werden kann.

Im Folgenden sollen weitere Einzelheiten und Merkmale der Erfindungen anhand von Beispielen näher erläutert werden. Diese sollen die Erfindung jedoch nicht einschränken, sondern nur erläutern. Es zeigt in schematischer Darstellung:
- Figur 1: Ansicht eines Obstadaptivpflückers
- Figur 2: Pflückrechen mit Scherenmechanik zur Verstellung der Zinkenabstände
- Figur 3: Prinzipdarstellung einer teleskopierbaren Stange mit Schubstangen und Griffen

Die Figuren zeigen im Einzelnen:

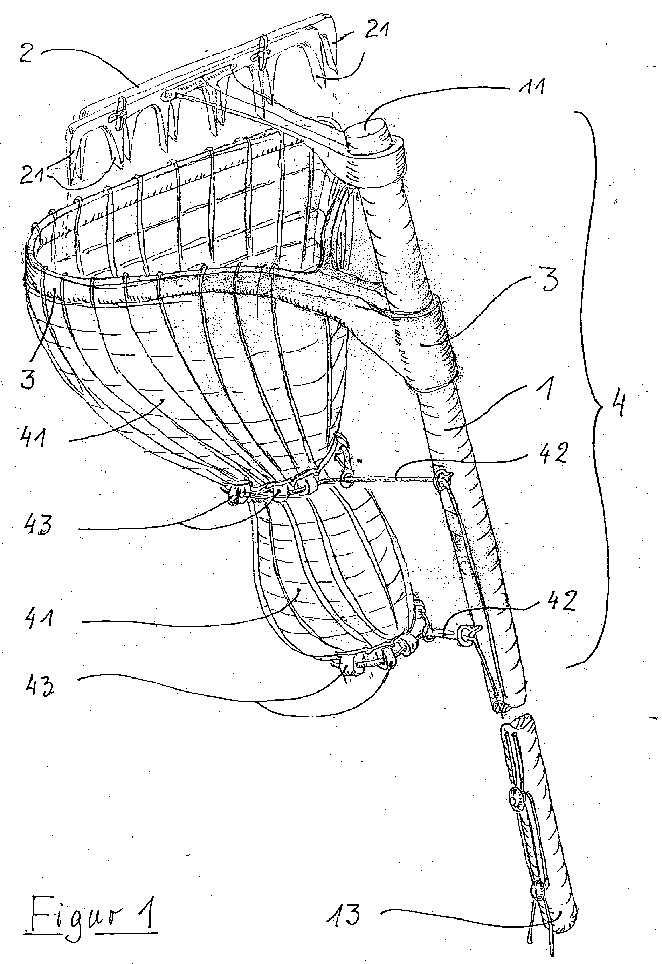

Figur 1 gibt eine dreidimensionale Darstellung eines Obstadaptivpflückers wieder, der aus einer einstückigen Stange 1 besteht, an deren oberem Ende 11 mit einem Ausleger ein Pflückrechen 2 befestigt ist. In der dargestellten Variante ist der Pflückrechen 2 aus zwei kammartigen Elementen mit Zinken 21 ausgeführt, die für maximalen Zinkenabstand deckungsgleich voreinander stehen. In Figur 1 ist erkennbar, dass des näher zum Kamm montierte Kammelement mit zwei Langlöchern versehen ist, durch welche hindurch eine Schraub ein das zweite Kammelement greift und die beiden Kammelemente miteinander verbindet. Im dargestellten Zustand ist das weiter entfernte Kammelement um etwa ¼ des Zinkenabstandes gegenüber dem vorderen verschoben.

In einem Abstand unterhalb des Pflückrechens ist der Aufhaltering 3 zu sehen, der ebenfalls mit einer Halterung an der Stange 1 befestigt ist. Daran ist der Auffangbeutel 4 befestigt. Er besteht in der dargestellten Variante aus einem grobmaschigen Netz, damit die Benutzer durch das Netz durch auf die zu pflückenden Früchte blicken kann.

In der dargestellten Variante sind zwei Kammern 41 gezeichnet. Sie sind am unteren Ende jeweils durch eine Kammerraffschnur 42 abgeschlossen, welche durch die Schlaufen 43 außen an den Auffangbeutel 4 geführt wird. Die untere Kammerraffschnur 42 ist gleichzeitig der Verschluss des unteren Endes von dem schlauchförmigen Auffangbeutel 4.
In der in Figur 1 dargestellten Variante ist zu erkennen, dass beide Kammerraffschnüre 42 über je eine Öse auf der Stange 1 umgelenkt werden und zum unteren Ende 13 der Stange verlaufen. Dort sind als Beispiel für eine Fixierung zwei großköpfige Schrauben eingebracht, um welche herum die Kammerraffschnüre 42 aufwickelbar sind.

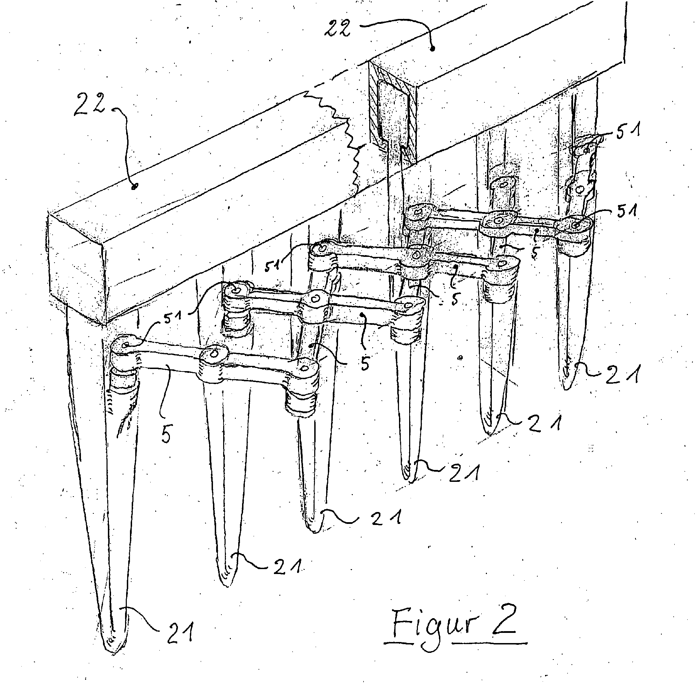

Figur 2 zeigt in dreidimensionaler Darstellung einen Teilbereich eines Pflückrechens 2 mit einer horizontal angeordneten Schiene 22 mit C-förmigem Querschnitt. In diesem Profil sind die Zinken 21 in Längsrichtung verschiebbar. Jeder Zinken trägt an einer Seite eine Schwenkachse 51. Auf diesen Schwenkachsen 51 sind bei den beiden inneren Zinken jeweils zwei Scherenhebel 5 gelagert, auf den jeweils äußeren Zinken 21 nur ein Scherenhebel 5. Zu erkennen ist, dass jeder Scherenhebel 5 insgesamt drei Schwenkachsen 51 aufweist und alle zu einer Scherenmechanik gelenkig verbunden sind. Die mittleren sechs Scherenhebel 5 sind jeweils in ihrer Mitte miteinander verbunden. Die vorderen Enden sind mit dem jeweils übernächsten Scherenhebel verbunden, die hinteren Enden zusätzlich noch mit den Schwenkachsen 51 die auf den Zinken 21 fest angeordnet sind.
In Figur 2 wird nachvollziehbar, dass bei einer Verstellung eines Abstandes zwischen zwei Zinken 21 sich zwangsläufig auch die Abstände zwischen allen anderen Zinken 21 um das gleiche Maß verändern, da sie durch die Scherenmechanik miteinander fest verkoppelt sind.

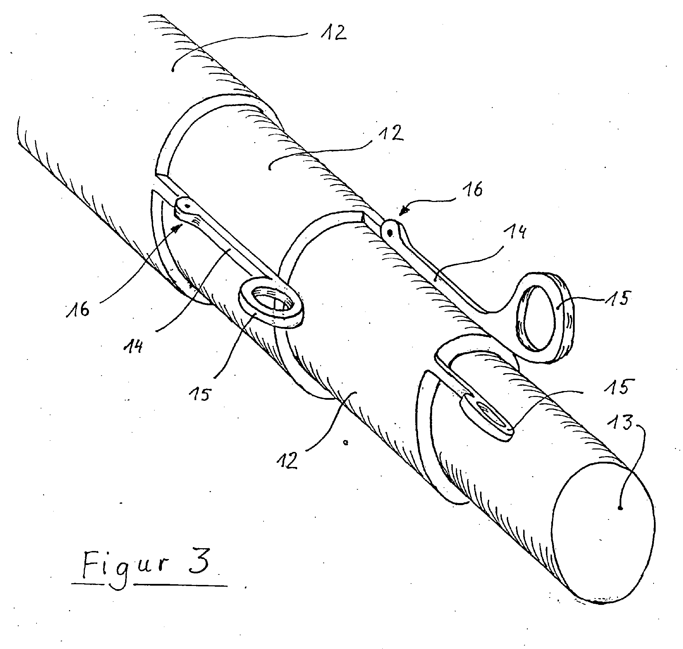

Figur 3 zeigt einen teleskopförmigen Aufbau der Stange 1 in dreidimensionaler Darstellung, mit einer drastischen Verkürzung jedes einzelnen Teleskopelementes. In einer praxisgerechten Ausführung wären die Teleskope im Verhältnis zu ihrem Durchmesser erheblich länger.

In Figur 3 ist zu erkennen, dass am unteren Ende 13 eines jeden Teleskopelementes 12 Schubstangen 14 angeordnet sind, an deren Ende ein Griff 15 befestigt ist. Mit dem Griff 15 sind die Teleskopelemente an das untere Ende 13 der Stange heranziehbar oder davon wegschiebbar.

In Figur 3 wird deutlich, dass bei einem sehr großen Verfahrweg der Teleskopelemente gegeneinander, die Schubstangen eine Betätigung vom unteren Ende 13 der Stange 1 ermöglichen.

Ebenfalls in Figur 3 eingezeichnet sind die Scharniere 16, mit deren Hilfe die Schubstangen 14 im eingefahrenen Zustand der Teleskope um knapp 180 Grad verschwenkt werden können und dann mit ihrem (Hand-) Griff 15 auf der Außenfläche des größten, eingefahrenen Teleskopelementes 12 aufliegen. Bei Betrachtung von Figur 3 wird vorstellbar, dass die Schubstangen 14 ohne Scharniere 16 über das untere Ende 13 hinausragen würden und damit der durch die Teleskopierung eigentlich beabsichtigten Verkürzung der Stange 1 entgegenstünden.

Nicht in Figur 3 eingezeichnet ist, wie die Griffe 15 zusätzlich noch die Teleskope miteinander verriegeln können. Dafür wäre zum Beispiel ein Stift unterhalb eines jeden Handgriffes 15 denkbar, welcher in Bohrungen der Seitenfläche des benachbarten Teleskopelementes 12 eingreift.

### Bezugszeichenliste

- 1: Stange
- 11: oberes Ende der Stange 1
- 12: Teleskopelement, Teil der Stange 1, rohrförmig und in das nächste Teleskopelement 12 schiebbar
- 13: unteres Ende der Stange 1
- 14: Schubstange, am unteren Ende eines Teleskopelementes 12
- 15: Griff, am unteren Ende der Schubstange 14
- 16: Scharnier, am oberen Ende der Schubstange 14
- 2: Pflückrechen, am oberen Ende 11 der Stange 1
- 21: Zinken, am Pflückrechen 2
- 22: Schiene, zur Verschiebung von Zinken 21
- 3: Aufhaltering, in einem Abstand unterhalb des Pflückrechens befestigt
- 4: Auffangbeutel, am Aufhaltering 3 befestigt
- 41: Kammern im Auffangbeutel 4
- 42: Kammerraffschnur, zum Schließen und öffnen der Kammern 41
- 43: Schlaufen, außen an Auffangbeutel 4 zur Führung einer Kammerraffschnur 42
- 5: Scherenhebel, zur Änderung des Abstandes der Zinken 21
- 51: Schwenkachsen, in Scherenhebel 5 drei Stück

## Patentansprüche

1. Obstadaptivpflücker, bestehend aus einer Stange 1 an deren oberem Ende 11 ein horizontaler Pflückrechen 2 mit Zinken 21 sowie in einem Abstand darunter ein Aufhaltering 3 befestigt sind, der einen Auffangbeutel 4 mit mehreren Kammern 41 an seiner Oberseite offen hält,
**dadurch gekennzeichnet, dass**
- die Abstände der Zinken 21 zueinander verstellbar sind und
- der schlauchförmige Auffangbeutel 4 in mehrere, hintereinander folgende Kammern 41 aufteilbar ist, wobei die Anzahl und die Größe der Kammern 41 einstellbar sind, indem je eine Kammerraffschnur 42 etwa horizontal durch Schlaufen 43 um den Auffangbeutel 4 herum geführt und an der Stange 1 lösbar befestigt ist, wobei die unterste Kammerraffschnur 42 zugleich als Verschluss der Unterseite des Auffangbeutels 4 dient und
- die Stange 1 aus mehreren, ineinander schiebbaren und lösbar miteinander verbundenen, rohrförmigen Teleskopelementen 12 besteht.

2. Obstadaptivpflücker nach Anspruch 1, **dadurch gekennzeichnet, dass** der Pflückrechen aus zwei gleichartigen, flächigen Elementen in der Form eines Kammes mit den Zinken 21 besteht, wobei die beiden Elemente aufeinander lösbar befestigt sind und um maximal den größten Abstand von zwei Zinken 21 zueinander horizontal verschiebbar sind.

3. Obstadaptivpflücker nach einem der vorhergehenden Ansprüche, **dadurch gekennzeichnet, dass** die Zinken 21 des Pflückrechens in einer horizontalen Schiene 22 mit C-förmigem Profil separat lösbar und verschiebbar fixiert sind.

4. Obstadaptivpflücker nach Anspruch 3, **dadurch gekennzeichnet, dass** die Zinken 21 über eine Scherenmechanik miteinander verbunden sind, bei der an jedem Zinken 21 je zwei Schwenkhebel 5 mit einem Ende auf einer gemeinsamen, am Zinken 21 befestigten Schwenkachse 51 angelenkt sind und jeder Schwenkhebel 5 in seiner Mitte mit der Mitte eines benachbarten Schwenkhebels 5 gelenkig verbunden ist und mit seinem anderen Ende mit dem anderen Ende eines Schwenkhebels vom übernächsten Zinken 21 gelenkig verbunden ist, wobei an den jeweils zwei äußersten Zinken 21 nur ein einziger Schwenkhebel 5 angeordnet ist.

5. Obstadaptivpflücker nach Anspruch 4 **dadurch gekennzeichnet, dass** die horizontale Schiene 22 in zwei Teilschienen aufgeteilt ist, wobei sich die Vorderseite der einen Teilschiene mit der Rückseite der anderen Teilschiene ganz oder teilweise überlappt und die beiden Teilschienen in Längsrichtung gegeneinander verschiebbar und lösbar fixiert sind.

6. Obstadaptivpflücker nach Anspruch 1 bis 5 **dadurch gekennzeichnet, dass** die Zinken 21 auf einem Kreisbogensegment angeordnet sind.

7. Obstadaptivpflücker nach einem der vorhergehenden Ansprüche, **dadurch gekennzeichnet, dass** die Zinken 21 aus einem harten Kern und einer darauf aufgebrachten, weichen Polsterschicht bestehen.

8. Obstadaptivpflücker nach einem der vorhergehenden Ansprüche, **dadurch gekennzeichnet, dass** die Kammerraffschnüre 42 bis zum unteren Ende 13 der Stange 1 verlaufen und dort fixierbar sind.

9. Obstadaptivpflücker nach einem der vorhergehenden Ansprüche, **dadurch gekennzeichnet, dass** der Auffangbeutel 4 zumindest teilweise aus durchsichtigem und/oder aus netzförmigem Material besteht.

10. Obstadaptivpflücker nach einem der vorhergehenden Ansprüche, **dadurch gekennzeichnet, dass** der Auffangbeutel 4 in wenigstens zwei nebeneinander liegende Kammern 41 aufteilbar ist.

11. Obstadaptivpflücker nach einem der vorhergehenden Ansprüche, **dadurch gekennzeichnet, dass** wenigstens die oberste Kammer oder Kammern 41 eine Austrittsöffnung aufweist, die von oben gesehen, außerhalb der Eintrittsöffnung angeordnet ist.

12. Obstadaptivpflücker nach Anspruch 11, **dadurch gekennzeichnet, dass** die Schlaufen 43 in einer zum Aufhaltering 3 in einem Winkel verdrehten Ebene angeordnet sind.

13. Obstadaptivpflücker nach Anspruch 11, **dadurch gekennzeichnet, dass** die Schlaufen 43 und/oder die Kammerraffschnüre 42 an einem Distanzstück befestigbar sind, welches in radialer Ausrichtung auf der Stange 1 befestigt ist.

14. Obstadaptivpffücker nach einem der vorhergehenden Ansprüche, **dadurch gekennzeichnet, dass** die Stange 1 als Rohr ausgebildet ist, dessen oberes Ende 11 sich in das untere Ende des Auffangbeutels 41 hinein öffnet.

15. Obstadaptivpflücker nach Anspruch 14, **dadurch gekennzeichnet, dass** sich das untere Ende 13 der Stange 1 in einen weiteren Auffangbeutel 4 öffnet, welcher in einem Winkel der Größenordnung 45 Grad zur Erdoberfläche ausrichtbar ist.

16. Obstadaptivpflücker nach einem der vorhergehenden Ansprüche, **dadurch gekennzeichnet, dass** wenigstens ein Teleskopelement 12 an seinem unteren Ende in Längsrichtung durch eine schmale Schubstange 14 verlängert ist, an deren Ende ein Griff 15 angeordnet ist.

17. Obstadaptivpflücker nach Anspruch 16, **dadurch gekennzeichnet, dass** die Schubstange 14 in der Nähe ihrer Befestigung am Teleskopelement 12 ein Scharnier 16 aufweist, dessen Schwenkachse senkrecht zur Längsachse des Teleskopelementes 12 ausgerichtet ist.

18. Obstadaptivpflücker nach einem der vorhergehenden Ansprüche, **dadurch gekennzeichnet, dass** an jedem Zinken 21 des Pflückrechens 2 ein etwa rechtwinklig dazu ausgerichtete Schwenkhebel befestigt sind, an dessen Ende eine Schwenkachse angeordnet ist, wobei sämtliche Verschwenkhebel auf einer einzigen, gemeinsamen Schwenkachse gelagert sind, die in der Nähe der Stange 1 angeordnet ist

19. Obstadaptivpflücker nach Anspruch 18, **dadurch gekennzeichnet, dass** sämtliche Schwenkhebel durch je eine Öffnung in einer vorzugsweise kreisbogensegmentförmigen Kulisse führen, wobei die Kulisse etwa senkrecht zu den Schwenkhebeln ausgerichtet ist und etwa parallel zu den Schwenkhebeln verschiebbar und lösbar fixiert ist.

## Claims

1. An adaptive fruit picker comprising a rod 1 to the upper end 11 of which is attached a horizontal picking rake 2 with prongs 21 and, a distance below the latter, a holding ring 3 which on its upper side holds open a collection bag 4 with a number of sections 41,
**characterised in that**
- the distances between the prongs can be adjusted in relation to one another, and
- the tubular collection bag 4 can be divided into a number of sections 41 following one behind the other, the number and the size of the sections 41 being adjustable by a respective section gathering string 42 being passed approximately horizontally through loops 43 around the collection bag 4 and being releaseably attached to the rod 1, the lowermost section gathering string 42 serving at the same time to close the lower side of the collection bag 4, and
- the rod 1 comprises a number of tubular telescopic elements 12 connected to one another releaseably and which can be pushed into one another.

2. The adaptive fruit picker according to Claim 1, **characterised in that** the picking rake comprises two similar, two-dimensional elements in the form of a comb with the prongs 21, the two elements being releaseably attached to one another and being moveable horizontally in relation to one another as a maximum by the largest distance between two prongs 21.

3. The adaptive fruit picker according to either of the preceding claims, **characterised in that** the prongs 21 of the picking rake are fixed moveabley and separately releaseably in a horizontal bar 22 with a C-shaped profile.

4. The adaptive fruit picker according to Claim 3, **characterised in that** the prongs 21 are connected to one another by a pincer mechanism with which on each prong 21 two pivot levers 5 respectively are guided at one end on a common pivot axis 51 attached to the prong 21 and each pivot lever 5 is connected flexibly at its centre to the centre of an adjacent pivot lever 5 and is connected flexibly at its other end to the other end of a pivot lever of the next but one prong 21, just a single pivot lever 5 being disposed on the respective two outer prongs 21.

5. The adaptive fruit picker according to Claim 4, **characterised in that** the horizontal bar 22 is divided into two partial bars, the front side of the one partial bar totally or partially overlapping with the rear side of the other partial bar, and the two partial bars being moveable in relation to one another in the longitudinal direction and being fixed releaseably.

6. The adaptive fruit picker according to Claims 1 to 5, **characterised in that** the prongs 21 are disposed on a ring segment.

7. The adaptive fruit picker according to any of the preceding claims, **characterised in that** the prongs 21 are made of a hard core and a soft cushioning layer applied to the latter.

8. The adaptive fruit picker according to any of the preceding claims, **characterised in that** the section gathering strings 42 extend to the lower end 13 of the rod 1 and can be fixed here.

9. The adaptive fruit picker according to any of the preceding claims, **characterised in that** the collection bag 4 is made at least partially of a transparent and/or of a netted material.

10. The adaptive fruit picker according to any of the preceding claims, **characterised in that** the collection bag 4 can be divided into at least two sections 41 lying next to one another.

11. The adaptive fruit picker according to any of the preceding claims, **characterised in that** at least the uppermost section or sections 41 has an exit opening which, as seen from above, is disposed outside of the admission opening.

12. The adaptive fruit picker according to Claim 11, **characterised in that** the loops 43 are disposed in a plane twisted at an angle to the holding ring 3.

13. The adaptive fruit picker according to Claim 11, **characterised in that** the loops 43 and/or the section gathering strings 42 can be attached to a spacer which is attached in a radial alignment to the rod 1.

14. The adaptive fruit picker according to any of the preceding claims, **characterised in that** the rod 1 is in the form of a tube the upper end 11 of which opens into the lower end of the collection bag 41.

15. The adaptive fruit picker according to Claim 14, **characterised in that** the lower end 13 of the rod 1 opens into a further collection bag 4 which can be aligned at an angle of the order of magnitude of 45 degrees to the surface of the ground.

16. The adaptive fruit picker according to any of the preceding claims, **characterised in that** at least one telescopic element 12 is extended at its lower end in a longitudinal direction by a narrow connecting rod 14 on the end of which is disposed a handle 15.

17. The adaptive fruit picker according to Claim 16, **characterised in that** the connecting rod 14 has close to its attachment to the telescopic element 12 a hinge 16 the pivot axis of which is aligned perpendicularly to the longitudinal axis of the telescopic element 12.

18. The adaptive fruit picker according to any of the preceding claims, **characterised in that** attached to each prong 21 of the picking rake 2 is a pivot lever aligned approximately at right angles to the latter and on the end of which a pivot axis is disposed, all of the pivot levers being mounted on a single, common pivot axis which is disposed close to the rod 1.

19. The adaptive fruit picker according to Claim 18, **characterised in that** all of the pivot levers pass through a respective opening in a preferably ring segment-shaped connecting link, the connecting link being aligned approximately perpendicularly to the pivot levers and being moveable and being fixed releaseably approximately parallel to the pivot levers.

## Revendications

1. Cueilloir adaptatif de fruits, constitué d'une perche 1 à l'extrémité supérieure 11 de laquelle sont fixés un râteau de cueillette 2 horizontal, ayant des dents 21, ainsi que, à une certaine distance en dessous de celui-ci, un anneau de retenue 3, qui maintient ouvert à son sommet, un sac collecteur 4 à plusieurs compartiments 41,
**caractérisé en ce que**
- les écartements mutuels des dents 21 sont ajustables et
- le sac collecteur 4, en forme de boyau, peut être divisé en plusieurs compartiments 41 qui se suivent en enfilade, le nombre et la taille des compartiments 41 étant réglables par le passage respectif d'un cordon de serrage de compartiment 42, à peu près horizontalement, à travers des passants 43, tout autour du sac collecteur 4, et sa fixation détachable à la perche 1, le cordon de serrage de compartiment 42 le plus bas servant alors en même temps de fermeture de la base du sac collecteur 4, et
- la perche 1 se compose de plusieurs éléments télescopiques 12 de forme tubulaire, aptes à coulisser l'un dans l'autre et reliés l'un à l'autre de façon séparable.

2. Cueilloir adaptatif de fruits selon la revendication 1, **caractérisé en ce que** le râteau de cueillette est constitué de deux éléments identiques, de configuration plane, sous la forme d'un peigne avec les dents 21, les deux éléments étant fixés l'un sur l'autre de façon séparable et pouvant être déplacés horizontalement en translation l'un par rapport à l'autre, au maximum de l'écartement le plus grand de deux dents 21.

3. Cueilloir adaptatif de fruits selon l'une des revendications précédentes, **caractérisé en ce que** les dents 21 du râteau de cueillette sont montées, séparément détachables et coulissantes, dans un rail horizontal 22 à profil en forme de C.

4. Cueilloir adaptatif de fruits selon la revendication 3, **caractérisé en ce que** les dents 21 sont reliées entre elles par l'intermédiaire d'un mécanisme de cisaillement, selon lequel, à chaque dent 21, deux leviers pivotants 5 respectifs sont articulés, par une extrémité, sur un axe de pivotement 51 commun, fixé à la dent 21, et chaque levier pivotant 5 est, en son milieu, relié, d'une façon articulée, au milieu d'un levier pivotant 5 voisin et est, par son autre extrémité, relié, d'une façon articulée, à l'autre extrémité d'un levier pivotant partant de la dent suivante plus éloignée 21, sachant qu'à chacune des deux dents 21 les plus extérieures, il n'est respectivement disposé qu'un seul levier pivotant 5.

5. Cueilloir adaptatif de fruits selon la revendication 4, **caractérisé en ce que** le rail horizontal 22 est divisé en deux rails élémentaires, la face avant de l'un des rails élémentaires se superposant alors, en totalité ou en partie, à la face arrière de l'autre rail élémentaire, et les deux rails élémentaires sont fixés de façon à être déplaçables en translation l'un vis-à-vis de l'autre, en direction longitudinale, et à être détachables.

6. Cueilloir adaptatif de fruits selon l'une des revendications 1 à 5, **caractérisé en ce que** les dents 21 sont disposées sur un segment d'arc de cercle.

7. Cueilloir adaptatif de fruits selon l'une des revendications précédentes, **caractérisé en ce que** les dents 21 sont constituées d'un noyau dur et d'une couche souple de rembourrage, rapportée sur celui-ci.

8. Cueilloir adaptatif de fruits selon l'une des revendications précédentes, **caractérisé en ce que** les cordons de serrage de compartiment 42 s'étendent jusqu'à l'extrémité inférieure 13 de la perche 1 et peuvent y être fixés.

9. Cueilloir adaptatif de fruits selon l'une des revendications précédentes, **caractérisé en ce que** le sac collecteur 4 est constitué, au moins en partie, d'un matériau transparent et/ou d'un matériau en forme de filet.

10. Cueilloir adaptatif de fruits selon l'une des revendications précédentes, **caractérisé en ce que** le sac collecteur 4 peut être divisé en au moins deux compartiments 41 placés l'un à côté de l'autre.

11. Cueilloir adaptatif de fruits selon l'une des revendications précédentes, **caractérisé en ce qu'**au moins le compartiment ou les compartiments 41 le ou les plus haut(s), présente(nt) une ouverture de sortie qui, vue d'en haut, se situe à l'extérieur de l'ouverture d'entrée.

12. Cueilloir adaptatif de fruits selon la revendication 11, **caractérisé en ce que** les passants 43 sont disposés dans un plan tourné d'un certain angle par rapport à l'anneau de retenue 3.

13. Cueilloir adaptatif de fruits selon la revendication 11, **caractérisé en ce que** les passants 43 et/ou les cordons de serrage de compartiment 42 peuvent être fixés à une pièce d'écartement, qui est fixée sur la perche 1 en étant orientée en direction radiale.

14. Cueilloir adaptatif de fruits selon l'une des revendications précédentes, **caractérisé en ce que** la perche 1 est conçue sous forme d'un tube, dont l'extrémité supérieure 11 s'ouvre dans l'extrémité inférieure du sac collecteur 41.

15. Cueilloir adaptatif de fruits selon la revendication 14, **caractérisé en ce que** l'extrémité inférieure 13 de la perche 1 s'ouvre dans un sac collecteur 4 supplémentaire, qui est orientable suivant un angle de l'ordre de grandeur de 45 degrés par rapport à la surface du sol.

16. Cueilloir adaptatif de fruits selon l'une des revendications précédentes, **caractérisé en ce qu'**au moins un élément télescopique 12 est prolongé en direction longitudinale, à son extrémité inférieure, par une étroite tige-poussoir 14, à l'extrémité de laquelle est disposée une poignée 15.

17. Cueilloir adaptatif de fruits selon la revendication 16, **caractérisé en ce que** la tige-poussoir 14 présente, au voisinage de sa fixation à l'élément télescopique 12, une articulation à charnière 16, dont l'axe de pivotement est orienté perpendiculairement à l'axe longitudinal de l'élément télescopique 12.

18. Cueilloir adaptatif de fruits selon l'une des revendications précédentes, **caractérisé en ce qu'**à chaque dent 21 du râteau de cueillette 2 est fixé un levier pivotant orienté à peu près orthogonalement à celle-ci, à l'extrémité duquel est disposé un axe de pivotement, tous les leviers pivotants étant montés à rotation sur un axe de pivotement unique, commun, qui est situé au voisinage de la perche 1.

19. Cueilloir adaptatif de fruits selon la revendication 18, **caractérisé en ce que** tous les leviers pivotants mènent, chacun à travers une couverture respective, à l'intérieur d'une coulisse, de préférence en forme de segment d'arc de cercle, la coulisse étant orientée à peu près perpendiculairement aux leviers pivotants et étant fixée de façon à être déplaçable en translation, à peu près parallèlement aux leviers pivotants, et à être détachable.
